# EUROPÄISCHE PATENTSCHRIFT

(11) **EP 2 833 449 B1**
(45) Veröffentlichungstag und Bekanntmachung des Hinweises auf die Patenterteilung: **27.04.2016**
(21) Anmeldenummer: 13178468.8
(22) Anmeldetag: 30.07.2013
(51) Int. Cl.: H01M 4/78, H01M 4/10, H01M 6/10

(54) **Elektrochemische Zelle mit einer als Hohlzylinder ausgebildeten positiven und einer darin angeordneten negativen Elektrode**
Electrochemical cell with a positive electrode in the form of a hollow cylinder and a negative electrode assembled therein
Cellule électrochimique dotée d'une électrode positive configurée sous forme de cylindre creux et d'une électrode négative disposée à l'intérieur

(43) Veröffentlichungstag der Anmeldung: 04.02.2015
(73) Patentinhaber: VARTA Microbattery GmbH, 73479 Ellwangen (DE)
(72) Erfinder: Brenner, Rolf, 73479 Ellwangen (DE)
(74) Vertreter: Patentanwaltskanzlei Cartagena

(56) Entgegenhaltungen:
- DE-A1- 3 138 168
- DE-C- 895 011
- US-A- 334 788
- US-A- 3 644 149

## Beschreibung

Die im Folgenden beschriebene Erfindung betrifft eine elektrochemische Zelle mit einer als Hohlzylinder ausgebildeten, einen Hohlraum definierenden positiven Elektrode und einer in dem Hohlraum angeordneten Elektrode entgegengesetzter Polarität.

Bei Zellen dieser Bauart handelt es sich häufig um Zellen, bei denen ein Alkalimetall, insbesondere Lithium, als Aktivmaterial in der negativen Elektrode verwendet wird. Beispiele für Batterien mit negativer Lithium-Elektrode sind die Lithium-Thionylchlorid-Batterie, die Lithium-Schwefeldioxid-Batterie, die Lithium-Kohlenstoffmonofluorid-Batterie, die Lithium-Eisensulfid-Batterie und die Lithium-Mangandioxid-Batterie. Als positive Elektroden kommen im Fall der letztgenannten Lithium-Mangandioxid-Batterie Mangandioxid-Elektroden, Eisendisulfid-Elektroden im Fall einer Lithium-Eisensulfid-Batterie und im Fall einer Lithium-Schwefeldioxid-Batterie in Acetonitril gelöstes Schwefeldioxid (absorbiert in einer Inertelektrode) zum Einsatz. Die positiven Elektroden sind dabei in vielen Fällen als Hohlzylinder ausgebildet. Im Inneren der positiven Elektrode ist die negative Lithium-Elektrode angeordnet, ummantelt von einem Separator, der die positive Elektrode von der negativen Elektrode trennt, dabei jedoch einen Ionentransport zwischen den beiden Elektronen zulässt.

Die elektrische Kontaktierung der positiven Elektrode stellt in der Regel kein Problem dar. Üblicherweise steht ihre Außenseite direkt mit der Innenwand eines elektrisch leitenden Batteriegehäuseteils in Kontakt. Die elektrische Kontaktierung kann entsprechend über dieses Gehäuseteil erfolgen. Aufwändiger ist dagegen die Kontaktierung der negativen Elektrode. Hierfür kommt klassisch ein Stift zum Einsatz, der an einem Ende konisch zugespitzt ist und am anderen Ende einen Flansch trägt, der bei der Gehäuseabdichtung eine Rolle spielt. Ein typisches Beispiel für einen solchen Stromableiter findet sich in der DE 32 40 806 C2. Die in der DE 32 40 806 C2 dargestellten Stromableiter sind allerdings sehr teuer, da sie auf Drehmaschinen spanend hergestellt werden müssen.

Aus der DE 895011 C ist ein Stromableiter mit einem außensitzenden Gewinde bekannt, der in einen von einer Wickelelektrode gebildeten Hohlraum eingeschraubt ist und mit dieser in elektrischem Kontakt steht. Die beschriebene Zelle weist einen Deckel mit einer verschließbaren Öffnung auf, die zum Nachfüllen von Elektrolytlösung dienen soll.

Der vorliegenden Erfindung lag die Aufgabe zugrunde, die bekannten Stromableiter für die negativen Elektroden von Batterien der eingangs genannten Konstruktion (mit einer als Hohlzylinder ausgebildeten, einen Hohlraum definierenden positiven Elektrode und einer in dem Hohlraum angeordneten negativen Elektrode) durch billigere zu ersetzen und dadurch die Produktionskosten von Lithium-Batterien insgesamt zu senken.

Diese Aufgabe wird gelöst durch das elektrochemische Element mit den Merkmalen des Anspruchs 1. Bevorzugte Ausführungsformen des erfindungsgemäßen elektrochemischen Elements sind in den abhängigen Ansprüchen 2 bis 7 angegeben.

Ein erfindungsgemäßes elektrochemisches Element umfasst wie die eingangs beschriebenen gattungsgemäßen elektrochemischen Elemente stets eine als Hohlzylinder ausgebildete, einen Hohlraum definierende positive Elektrode sowie eine negative Elektrode, die den Hohlraum mindestens teilweise ausfüllt. Zwischen der positiven und der negativen Elektrode ist ein Separator angeordnet. Umschlossen werden die positive Elektrode samt der in dem Hohlraum angeordneten negativen Elektrode und dem Separator von einem Gehäuse, an dem die außenliegende Mantelfläche der positiven Elektrode anliegt.

Zur elektrischen Kontaktierung der Elektroden ist für die positive Elektrode ein erster Stromableiter vorgesehen, für die negative Elektrode ein zweiter Stromableiter. Als erster Stromableiter für die positive Elektrode dient ein Teil des Gehäuses, das sie umschließt. Als zweiter Stromableiter für die negative Elektrode ist erfindungsgemäß ein Stift vorgesehen, der auf seiner Außenseite ein Gewinde trägt. Dieser ersetzt die aus dem Stand der Technik bekannten, an einem Ende konisch zugespitzten Stifte mit dem Flansch am Ende.

Unter einem Gewinde versteht man bekanntlich eine profilierte Einkerbung, die fortlaufend und wendelartig in einer Schraubenlinie um einen meist zylinderförmigen Grundkörper - hier den erwähnten Stift - verläuft. Die Kerbe wird als Gewindegang bezeichnet.

Der verwendete Stift weist an einem Ende einen Kopf sowie aus diesem heraustretend einen das Gewinde tragenden Schaft auf. Der Schaft ist bevorzugt in dem Hohlraum angeordnet, der von der positiven Elektrode gebildet wird und der mindestens teilweise mit der negativen Elektrode ausgefüllt ist. Besonders bevorzugt liegt der Schaft zentral in der Achse des Hohlzylinders, wobei der Kopf stirnseitig aus dem Hohlzylinder herausragt. Der das Gewinde tragende Schaft steht bevorzugt in unmittelbarem Kontakt zur zweiten Elektrode. Besonders bevorzugt ist zumindest der das Gewinde tragende Bereich des Schafts, vorzugsweise vollständig, mit Elektrodenmaterial bedeckt. Hierzu kann man beispielsweise flüssiges Lithium bereitstellen, den Schaft darin eintauchen und das Lithium erkalten lassen, so dass den Schaft mantelartig umschließt. Der aus dem Hohlzylinder herausragende Kopf ist hingegen in aller Regel frei von Elektrodenmaterial.

Bevorzugt besteht der Stift aus Stahl und weist einen geschlossenen Überzug aus Nickel oder aus einer Nickellegierung auf.

In bevorzugten Ausführungsformen weist der Kopf ein Formelement zum formschlüssigen Kontakt mit Werkzeugen auf. Als Formelemente kommen beispielsweise ein Schlitz oder ein kreuzförmiger Schlitz in Frage. Weitere Varianten möglicher Formelemente sind ein Außen- oder ein Innenmehrkant, insbesondere ein Außen- oder Innensechskant, oder ein Innen- oder Außenvielzahn (XZN).

Zu seinem freien, dem Kopf entgegengesetzten Ende hin ist der Schaft in aller Regel konisch ausgebildet.

Gegenüber den aus dem Stand der Technik bekannten Stromableitern haben die erfindungsgemäß verwendeten gewindetragenden Stifte den Vorteil, dass sie - aufgrund des Gewindes - eine größere Kontaktfläche zu der von ihnen kontaktierten Elektrode aufweisen. Im Hinblick auf die Strombelastbarkeit der erfindungsgemäßen elektrochemischen Zellen stellt dies einen großen Vorteil dar. Im Hinblick auf die der Erfindung zugrundeliegende Aufgabe wirkt sich vorteilhaft aus, dass Stifte mit den genannten Merkmalen in nahezu allen denkbaren Größen und Formvarianten im Handel erhältlich sind, nämlich in Form von handelsüblichen Schrauben. Als Befestigungselemente sind Schrauben bereits seit hunderten von Jahren bekannt. Ihre Verwendung als Stromableiter in einer Batterie ist jedoch neu. Erfindungsgemäß gut geeignet sind beispielsweise metallische Holzschrauben, die bekanntlich meist schwach konisch ausgebildet sind und sich beim Eindrehen in Holz ihre Gegengewinde selbst schneiden.

Das Gehäuse eines erfindungsgemäßen elektrochemischen Elements besteht aus mehreren Einzelteilen. Es umfasst
- ein erstes becherförmiges Gehäuseteil mit einem stirnseitigen Gehäuseboden, einem umlaufenden Gehäusemantel und einer dem Gehäuseboden gegenüberliegenden stirnseitigen Öffnung,
- ein zweites, scheibenförmiges, die stirnseitige Öffnung des ersten Gehäuseteils verschließendes Gehäuseteil sowie
- eine elektrisch isolierende Dichtung, die zwischen dem ersten und dem zweiten Gehäuseteil angeordnet ist.

Die außenliegende Mantelfläche der hohlzylindrisch ausgebildeten positiven Elektrode liegt in der Regel flächig an der Innenseite des umlaufenden Gehäusemantels an. Dadurch soll ein möglichst großflächiger elektrischer Kontakt zwischen der Elektrode und dem Gehäusemantel gewährleistet werden. Das erste, becherförmige Gehäuseteil fungiert als positiver Abgriffspol des erfindungsgemäßen elektrochemischen Elements.

Insbesondere aus produktionstechnischen Gründen wird die als Hohlzylinder ausgebildete positive Elektrode in aller Regel nicht einstückig in das becherförmige Gehäuseteil eingebracht, sondern in Form von einzelnen Segmenten, die zusammengesetzt die positive Elektrode bilden. Beispielsweise können in dem becherförmigen Zellgehäuse mehrere ringförmige Segmente aufeinander gestapelt werden. Der Innendurchmesser der ringförmigen Segmente bestimmt dann das Volumen und den Durchmesser des Hohlraums für die negative Elektrode. Der Außendurchmesser der ringförmigen Segmente ist in der Regel exakt auf den entsprechenden Innendurchmesser des becherförmigen ersten Gehäuseteils abgestimmt. Die einzelnen ringförmigen Segmente grenzen dabei über erste Kontaktflächen flächig aneinander. Darüber hinaus liegen sie über zweite Kontaktflächen an der Innenseite des umlaufenden Gehäusemantels an.

Das zweite, scheibenförmige Gehäuseteil weist eine Innenseite auf, die mit dem zweiten Stromableiter, insbesondere mit dem Kopf des zweiten Stromableiters, in elektrisch leitendem Kontakt steht. Es fungiert als negativer Abgriffspol des erfindungsgemäßen elektrochemischen Elements.

Wie eingangs erwähnt, weisen die aus dem Stand der Technik bekannten Stromableiter in der Regel einen Kopf mit einem flanschartigen Profil auf, das nur sehr aufwändig herzustellen ist. Handelsübliche Schrauben weisen hingegen einen Kopf auf, der eines der genannten Formelemente zum formschlüssigen Kontakt mit einem Werkzeug, beispielsweise einem Schraubendreher, aufweist. Eine Möglichkeit, handelsübliche Schrauben ohne Weiter- oder Nachbearbeitung als Stromableiter in Batterien verwenden zu können, besteht darin, den Kopf der Schrauben weder durch das Gehäuse nach außen zu führen noch an der Abdichtung des Gehäuses teilhaben zu lassen. Stattdessen wird die beschriebene stirnseitige Öffnung des ersten Gehäuseteils ausschließlich mittels des zweiten, scheibenförmigen Gehäuseteils sowie der erwähnten Dichtung verschlossen. Der schraubenförmige Stromableiter muss lediglich mit dem zweiten Gehäuseteil in elektrischem Kontakt stehen. Sein Kopf kann dazu unmittelbar an dem Gehäuseteil anliegen oder mit diesem verschweißt sein. Die Form des Kopfes ist dabei völlig irrelevant. Handelsübliche Schrauben können entsprechend unmodifiziert verwendet werden.

Wie bereits aus den einleitenden Ausführungen der Anmeldung hervorgeht, handelt es sich bei dem erfindungsgemäßen elektrochemischen Element bevorzugt um eine Lithium-Batterie. Es weist bevorzugt eine Lithium-Elektrode als negative Elektrode auf. Grundsätzlich ist das Prinzip der Verwendung des schraubenförmigen Stromableiters aber auch für andere Zelltypen einsetzbar. Als Beispiel sind Alkali-Mangan-Batterien zu nennen, die häufig ebenfalls eine Konstruktion mit einer hohlzylindrischen positiven Elektrode und einer innerhalb des Hohlzylinders angeordneten negativen Elektrode konstruiert werden. Die negative Elektrode besteht bei Alkali-Mangan-Batterien meist aus einer Zinkpaste, die ebenfalls mittels eines schraubenförmigen Stromableiters kontaktiert werden kann.

Die beschriebenen sowie weitere Merkmale des erfindungsgemäßen elektrochemischen Elements ergeben sich auch aus der nun folgenden Beschreibung der in der Zeichnung dargestellten bevorzugten Ausführungsform in Verbindung mit den Unteransprüchen. Dabei können einzelne Merkmale der Erfindung für sich allein oder in Kombination miteinander verwirklicht sein. Die beschriebenen Ausführungsformen dienen lediglich zur Erläuterung und zum besseren Verständnis der Erfindung und sind in keiner Weise einschränkend zu verstehen.

### Figurenbeschreibung

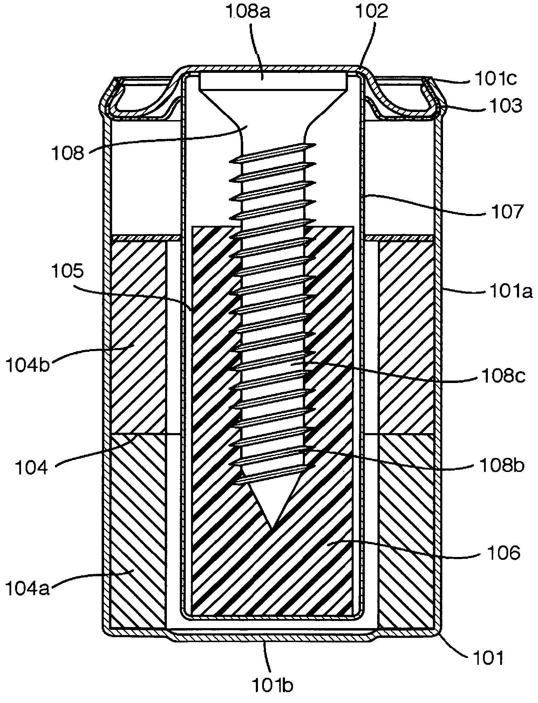

In **Fig. 1** ist eine bevorzugte Ausführungsform eines erfindungsgemäßen elektrochemischen Elements **100** schematisch im Längsschnitt dargestellt. Es weist zum einen ein becherförmiges Gehäuseteil **101** mit einem zylindrischen Mantel **101a** und einem ebenen, kreisförmig ausgebildeten Boden **101b** auf. Stirnseitig weist das Gehäuseteil **101** eine kreisrunde, dem Boden **101b** gegenüberliegende Öffnung auf. Diese ist mittels eines scheibenförmigen, radial profilierten Gehäuseteils **102** verschlossen. Hierzu ist der Öffnungsrand **101c** des Gehäuseteils **101** radial nach innen umgebogen, über den Rand des scheibenförmigen Gehäuseteils **102** hinweg, so dass dieses in axialer Richtung formschlüssig fixiert ist. Getrennt sind die Gehäuseteile **101** und **102** durch die aus einem elektrisch isolierenden Kunststoff bestehende Dichtung **103.**

An der Innenseite **101a** des Gehäuses liegt die als Hohlzylinder ausgebildete positive Elektrode **104** an, die aus zwei Einzelsegmenten **104a** und **104b** zusammengesetzt ist. Die Einzelsegmente **104a** und **104b** sind jeweils ringförmig ausgebildet und weisen einen jeweils identischen Außen- und Innendurchmesser auf. Innerhalb des Gehäuseteils **101** sind sie stapelförmig angeordnet und definieren in ihrem Zentrum den Hohlraum **105.** In diesem ist die negative Elektrode **106** angeordnet, die von einem becherförmigen Separator **107** umgeben ist. Letzterer trennt die Elektroden **104** und **106** voneinander.

Die innerhalb des Hohlraums **105** angeordnete negative Elektrode **106** wird durch den schraubenförmigen Stromableiter **108** kontaktiert. Dieser weist einen Kopf **108a** auf, der an der Innenseite des scheibenförmigen Gehäuseteils **102** unmittelbar anliegt sowie einen ein Gewinde **108b** tragenden Schaft **108c.** Letzterer steckt weitestgehend in der negativen Elektrode **106** und steht großflächig mit dieser in Kontakt.

## Patentansprüche

1. Elektrochemisches Element, umfassend
• eine als Hohlzylinder ausgebildete, einen Hohlraum definierende positive Elektrode mit einer außenliegenden Mantelfläche,
• eine negative Elektrode, die den Hohlraum mindestens teilweise ausfüllt,
• einen zwischen der positiven und der negativen Elektrode angeordneten Separator,
• einen ersten Stromableiter für die positive und einen zweiten Stromableiter für die negative Elektrode sowie
• ein Gehäuse, das die positive Elektrode samt der in dem Hohlraum angeordneten negativen Elektrode und dem Separator umschließt,
wobei
• das Gehäuse aus einem ersten, becherförmigen Gehäuseteil mit einem stirnseitigen Gehäuseboden, einem umlaufenden Gehäusemantel und einer dem Gehäuseboden gegenüberliegenden stirnseitigen Öffnung und einem zweiten, scheibenförmigen, Gehäuseteil besteht, wobei eine elektrisch isolierende Dichtung zwischen dem ersten und dem zweiten Gehäuseteil angeordnet ist,
• die stirnseitige Öffnung des ersten Gehäuseteils ausschließlich mittels des zweiten, scheibenförmigen Gehäuseteils und der Dichtung verschlossen ist, und
• das becherförmige Gehäuseteil als erster Stromableiter für die positive Elektrode dient und als zweiter Stromableiter für die negative Elektrode ein Stift vorgesehen ist, der einen Kopf aufweist sowie aus diesem heraustretend einen ein Gewinde tragenden Schaft, wobei der Kopf an der Innenseite des scheibenförmigen Gehäuseteils unmittelbar anliegt oder mit diesem verschweißt ist.

2. Elektrochemisches Element nach Anspruch 1, **dadurch gekennzeichnet, dass** der Schaft in dem Hohlraum angeordnet ist, vorzugsweise zentral in der Achse des Hohlzylinders, und der Kopf stirnseitig aus dem Hohlzylinder herausragt.

3. Elektrochemisches Element nach Anspruch 1 oder Anspruch 2, **dadurch gekennzeichnet, dass** der Kopf ein Formelement zum formschlüssigen Kontakt mit Werkzeugen für das Drehen der Schraube aufweist.

4. Elektrochemisches Element nach einem der Ansprüche 1 bis 3, **dadurch gekennzeichnet, dass** der Schaft zu seinem freien Ende hin konisch ausgebildet ist.

5. Elektrochemisches Element nach Anspruch 1, **dadurch gekennzeichnet, dass** die außenliegende Mantelfläche der hohlzylindrisch ausgebildeten positiven Elektrode flächig an der Innenseite des umlaufenden Gehäusemantels anliegt.

6. Elektrochemisches Element nach einem der vorhergehenden Ansprüche, **dadurch gekennzeichnet, dass** sich die positive Elektrode aus mindestens zwei ringförmigen Einzelsegmenten zusammensetzt, die über erste Kontaktflächen flächig aneinandergrenzen und über zweite Kontaktflächen an der Innenseite des umlaufenden Gehäusemantels anliegen.

7. Elektrochemisches Element nach einem der vorhergehenden Ansprüche, **dadurch gekennzeichnet, dass** es sich bei der negativen Elektrode um eine Lithium-Elektrode handelt.

## Claims

1. Electrochemical element, comprising
• a positive electrode, which is formed as a hollow cylinder, defines a cavity and has an outer lateral surface,
• a negative electrode, which at least partially fills the cavity,
• a separator, which is arranged between the positive electrode and the negative electrode,
• a first current output conductor for the positive electrode and a second current output conductor for the negative electrode and also
• a housing, which encloses the positive electrode together with the negative electrode, arranged in the cavity, and the separator,
wherein
• the housing consists of a first cup-shaped housing part with a housing base at one end face, a surrounding housing shell and an opening at the end face opposite from the housing base and of a second, disc-shaped housing part, wherein an electrically insulating seal is arranged between the first housing part and the second housing part,
• the opening at the end face of the first housing part is closed exclusively by means of the second, disc-shaped housing part and the seal, and
• the cup-shaped housing part serves as a first current output conductor for the positive electrode and a pin is provided as the second current output conductor for the negative electrode, which pin has a head and, protruding from the latter, a shank bearing a thread, wherein the head lies directly against the inner side of the disc-shaped housing part or is welded to it.

2. Electrochemical element according to Claim 1, **characterized in that** the shank is arranged in the cavity, preferably centrally in the axis of the hollow cylinder, and the head protrudes out of the hollow cylinder at one end face.

3. Electrochemical element according to Claim 1 or 2, **characterized in that** the head has a shaped element for form-fitting contact with tools for the turning of the screw.

4. Electrochemical element according to one of Claims 1 to 3, **characterized in that** the shank is formed conically towards its free end.

5. Electrochemical element according to Claim 1, **characterized in that** the outer lateral surface of the hollow-cylindrically formed positive electrode lies flat against the inner side of the surrounding housing shell.

6. Electrochemical element according to one of the preceding claims, **characterized in that** the positive electrode is made up of at least two annular individual segments, which adjoin with first contact areas one flat against the other and lie with second contact areas against the inner side of the surrounding housing shell.

7. Electrochemical element according to one of the preceding claims, **characterized in that** the negative electrode is a lithium electrode.

## Revendications

1. Elément électrochimique comprenant
une électrode positive configurée en cylindre creux, définissant une cavité et dotée d'une surface d'enveloppe extérieure,
une électrode négative qui remplit au moins en partie la cavité,
un séparateur disposé entre l'électrode positive et l'électrode négative,
un premier évacuateur de courant pour l'électrode positive ainsi qu'un deuxième évacuateur de courant pour l'électrode négative, et
un boîtier qui englobe l'électrode positive ainsi que l'électrode négative et le séparateur disposés dans la cavité,
le boîtier étant constitué d'une première partie de boîtier en forme de godet présentant un fond frontal de boîtier, une enveloppe périphérique de boîtier et une ouverture frontale opposée au fond du boîtier, ainsi que d'une deuxième partie de boîtier en forme de disque, un joint d'étanchéité électriquement isolant étant disposé entre la première et la deuxième partie du boîtier,
l'ouverture frontale de la première partie du boîtier étant fermée exclusivement au moyen de la deuxième partie de boîtier en forme de disque et du joint d'étanchéité, et
la partie de boîtier en forme de godet servant de premier évacuateur de courant pour l'électrode positive et une tige qui présente une tête ainsi que, partant de cette dernière, une tige portant un filet, étant prévue comme deuxième évacuateur de courant pour l'électrode négative, la tête reposant directement sur le côté intérieur de la partie de boîtier en forme de disque ou étant soudée à cette dernière.

2. Elément électrochimique selon la revendication 1, **caractérisé en ce que** la tige est disposée dans la cavité, de préférence au centre suivant l'axe du cylindre creux, la tête débordant frontalement du cylindre creux.

3. Elément électrochimique selon la revendication 1 ou la revendication 2, **caractérisé en ce que** la tête présente un élément façonné qui assure un contact en correspondance géométrique avec des outils permettant de faire tourner la vis.

4. Elément électrochimique selon l'une des revendications 1 à 3, **caractérisé en ce que** la tige est conique à son extrémité libre.

5. Elément électrochimique selon la revendication 1, **caractérisé en ce que** la surface d'enveloppe extérieure de l'électrode positive configurée en cylindre creux repose à plat sur la face intérieure de l'enveloppe périphérique du boîtier.

6. Elément électrochimique selon l'une des revendications précédentes, **caractérisé en ce que** l'électrode positive est constituée de l'assemblage d'au moins deux segments annulaires distincts qui sont adjacents à plat l'un à l'autre par des premières surfaces de contact et qui reposent par des deuxièmes surfaces de contact sur la face intérieure de l'enveloppe périphérique du boîtier.

7. Elément électrochimique selon l'une des revendications précédentes, **caractérisé en ce que** l'électrode négative est une électrode au lithium.
